# EUROPÄISCHE PATENTSCHRIFT

(11) **EP 3 961 356 B1**
(45) Veröffentlichungstag und Bekanntmachung des Hinweises auf die Patenterteilung: **25.10.2023**
(21) Anmeldenummer: 21188012.5
(22) Anmeldetag: 27.07.2021
(51) Int. Cl.: G06F 3/023, G06F 3/038, G06F 3/0489

(54) **VERFAHREN ZUM UMSCHALTEN VON PERIPHERIEGERÄTEN ZWISCHEN ZWEI COMPUTERSYSTEMEN**
METHOD FOR EXCHANGING PERIPHERAL UNITS BETWEEN TWO COMPUTER SYSTEMS
PROCÉDÉ DE COMMUTATION DES APPAREILS PÉRIPHÉRIQUES ENTRE DEUX SYSTÈMES INFORMATIQUES

(30) Priorität: 28.08.2020 DE 102020122586
(43) Veröffentlichungstag der Anmeldung: 02.03.2022
(73) Patentinhaber: Fujitsu Client Computing Limited, Kawasaki, Kanagawa 211-0058 (JP)
(72) Erfinder: Barl, Tobias, 86156 Augsburg (DE)
(74) Vertreter: Epping - Hermann - Fischer

(56) Entgegenhaltungen:
- WO-A1-2009/114000
- US-A1- 2004 075 638

## Beschreibung

Die Erfindung betrifft ein Verfahren zum Umschalten von Peripheriegeräten zwischen wenigstens zwei Computersystemen. Ferner betrifft die Erfindung ein Display. Zudem betrifft die Erfindung eine Anordnung mit einem solchen Display, wenigstens einem Peripheriegerät und wenigstens zwei Computersystemen, die zum Umschalten eines Peripheriegerätes zwischen zwei Computersystemen eingerichtet sind.

Es sind immer häufiger Anwendungen gewünscht, bei denen wenigstens zwei Computersysteme an ein Display angeschlossen sind, wobei Bild-/Videosignale der verschiedenen Computersysteme über das Display darstellbar sind. Mit zunehmender Größe der Bildschirmfläche wird auch eine sogenannte Picture-by-Picture (PbP)-Funktionalität immer beliebter. Mit dieser Funktion können Inhalte aus den verschiedenen Bild-/Videoquellen der verschiedenen Computersysteme gleichzeitig auf einem Displaybildschirm dargestellt werden.

Ein am Display zusätzlich angeschlossenes Peripheriegerät kann dabei nur an eines der verschiedenen Computersysteme zu einem bestimmten Zeitpunkt angebunden sein. Beispielsweise können eine Computermaus beziehungsweise eine Tastatur, die an das Display angeschlossen sind, zu einem Zeitpunkt nur eines der mehreren Computersysteme steuern beziehungsweise mit nur einem dieser Computersysteme interagieren.

Entsprechendes gilt für andere Arten von Peripheriegeräten, wie zum Beispiel Smartphones, Kameras, Scanner, Drucker, Tablets, und so weiter analog.

Herkömmlich muss für einen Wechsel einer Anbindung eines Peripheriegerätes, das mittels des Displays an eines der Computersysteme angebunden ist, ein Benutzer entweder den primären Bild-/Videoeingang händisch umstellen oder die USB-Upstream-Einstellungen anpassen, zum Beispiel in einem Bildschirmmenü (On Screen Display, OSD) des Displays. Diese herkömmlichen Optionen sind hinderlich und unterbrechen den Arbeitsablauf eines Benutzers.

Alternative Lösungen sehen vor, eine Anbindung eines Peripheriegerätes über eine Netzwerkverbindung zwischen mehreren Computersystemen zu wechseln. Dies hat jedoch den Nachteil, dass die beteiligten Computersysteme über das gleiche Netzwerk verbunden sein müssen.

Die US 2004/075638 A1 offenbart ein USB-basiertes online onscreen-display (OSD) System. Das OSD-System umfasst mindestens eine USB-Umschaltsteuerung, einen USB-Port-Switch, einen Displaycontroller und mindestens eine Hardware-Aktuatoreinheit und eine Plattform-Aktuatoreinheit. Der USB-Port-Switch ist mit USB-Schnittstellenanschlüssen von mindestens zwei Computern verbunden und wird von der USB-Umschaltsteuerung gesteuert, um auf die USB-Schnittstellenanschlüsse der Computer zuzugreifen und zwischen ihnen umzuschalten. Der Displaycontroller wird durch die USB-Umschaltsteuerung gesteuert, um das Anzeigebild des ausgewählten Computers anzuzeigen. Die USB-Umschaltsteuerung empfängt einen Umschaltbefehl von der Hardware-Aktuatoreinheit und/oder der Plattform-Aktuatoreinheit und gibt als Reaktion darauf ein Steuersignal an den Displaycontroller aus, um das angezeigte Bild zwischen den Computern umzuschalten. Die Plattformaktuatoreinheit, die in den Computern enthalten ist und auf einer Displayvorrichtung angezeigt wird, stellt eine Dialogbox für die Bedienerauswahl zwischen den Computern bereit.

Es ist eine Aufgabe der Erfindung, ein Verfahren, ein Display sowie eine Anordnung mit einem Display, einem Peripheriegerät und wenigstens zwei Computersystemen zu beschreiben, die ein verbessertes und einfacheres Umschalten eines Peripheriegerätes zwischen zwei Computersystemen ermöglichen.

Diese Aufgabe wird gemäß einem ersten Aspekt durch ein Verfahren gemäß Patentanspruch 1 gelöst. Weitergehende Implementierungen sind in den Unteransprüchen offenbart.

Das Verfahren ist zum Umschalten von Peripheriegeräten (wenigstens eines Peripheriegerätes) zwischen wenigstens zwei Computersystemen implementiert, wobei das Peripheriegerät beziehungsweise die Peripheriegeräte und die zwei Computersysteme an ein gemeinsames Display (Bildschirm, Computerbildschirm, Computerdisplay) angeschlossen sind. Der Begriff "gemeinsam" bedeutet hier, dass das Peripheriegerät beziehungsweise die Peripheriegeräte und die wenigstens zwei Computersysteme parallel bzw. gleichzeitig am Display angeschlossen sind. Beispielsweise ist das Peripheriegerät beziehungsweise die Peripheriegeräte über eine erste Schnittstelle, das erste Computersystem über eine oder mehrere zweite Schnittstellen sowie das zweite Computersystem über eine oder mehrere dritte Schnittstellen parallel bzw. gleichzeitig am Display angeschlossen. Das Peripheriegerät beziehungsweise die Peripheriegeräte ist/sind beispielsweise über eine Universal Serial Bus (USB)-Schnittstelle am Display angeschlossen. Eines oder mehrere der wenigstens zwei Computersysteme sind zum Beispiel jeweils über eine USB-Schnittstelle (Daten-Schnittstelle bzw. Energieversorgung) und über eine Bild-/Videosignal-Schnittstelle am Display angeschlossen. Auf diese Weise können das eine oder die mehreren der wenigstens zwei Computersysteme über die USB-Schnittstelle Daten/Energie mit dem Display austauschen und parallel dazu über die Bild-/Videosignal-Schnittstelle Bild-/Videosignale an das Display senden beziehungsweise entsprechende Rückinformationen vom Display erhalten. Gängige Bild-/Videosignal-Schnittstellen, die hier Verwendung finden können, sind beispielsweise Digital Visual Interface (DVI), Video Graphics Array (VGA), Display Port (DP) oder High Definition Multimedia Interface (HDMI).

Das Peripheriegerät beziehungsweise die Peripheriegeräte ist/sind über das gemeinsame Display an ein erstes der wenigstens zwei Computersysteme angebunden. Auf diese Weise kann das Peripheriegerät beziehungsweise die Peripheriegeräte das erste Computersystem steuern bzw. mit dem ersten Computersystem interagieren und umgekehrt. Eine Signalisierung erfolgt über den jeweiligen Schnittstellen- Anschluss am Display.

In einer beispielhaften Implementierung geht dem Schritt des Erzeugens eines softwarebasierten Wechselbefehls durch eine Software in einem der zwei Computersysteme ein Erkennen eines Umschalt-Wunsches seitens des Benutzers über eine frei definierbare Eingabe oder ein frei definierbares Ereignis von Computermaus, Tastatur oder einem anderen Peripheriegerät voraus. Dies ist aber optional und für das Verfahren nicht zwingend.

Das Übertragen des softwarebasierten Wechselbefehls vom Computersystem, das den softwarebasierten Wechselbefehl erzeugt, an das Display erfolgt über eine Datenleitung einer Videoschnittstelle. Dies hat den Vorteil, dass eine vorhandene Videoschnittstelle zur Übertragung genutzt werden kann und keine zusätzlichen Schnittstellen für die Übertragung eingerichtet werden müssen. Die Umschaltkomponente ist beispielsweise ein sogenannter KVM-Schalter (KVM bedeutet Keyboard, Video, Maus) zum Umschalten der Anbindung des bzw. der Peripheriegeräte bzw. zum Umschalten der Upstream-Einstellungen zwischen den beteiligten Computersystemen.

Bei dem erläuterten Verfahren ist eines der Computersysteme das auslösende System für eine Umschaltung der Anbindung des Peripheriegerätes beziehungsweise der Peripheriegeräte. Das auslösende System kann das erste Computersystem sein, an dem das Peripheriegerät zunächst angebunden ist, oder aber das andere Computersystem, an das das Peripheriegerät nicht angebunden ist, aber angebunden werden soll.

Das erläuterte Verfahren hat gegenüber herkömmlichen Lösungen den Vorteil, dass ein automatisiertes, softwarebasiertes Umschalten der Anbindung des Peripheriegerätes beziehungsweise der Peripheriegeräte zwischen den mehreren Computersystemen durchgeführt werden kann, ohne sich bestimmten Einstellungen in Bildschirmmenüs am Display oder einem händischen Umstecken beziehungsweise Umkonfigurieren von Schnittstellen-Anschlüssen am Display bedienen zu müssen. Auf diese Weise wird ein einfacheres und rasches Umschalten des Peripheriegerätes beziehungsweise der Peripheriegeräte zwischen den beiden Computersystemen ermöglicht. Das Umschalten wird über die Software des auslösenden Systems durch Erzeugen des softwarebasierten Wechselbefehls gesteuert bzw. angewiesen.

In alternativen oder ergänzenden Weiterbildungen oder Implementierungen des Verfahrens wird der softwarebasierte Wechselbefehl durch eine Auswerteeinheit innerhalb des Displays verarbeitet, wobei die Auswerteeinheit das Umschalten in der Umschaltkomponente auslöst. Die Auswerteeinheit ist beispielsweise ein spezieller Schaltkreis, zum Beispiel eine integrierte Schaltung, ein Mikrocontroller, und so weiter, zum Auswerten des softwarebasierten Wechselbefehls und zum Auslösen eines Umschaltens in der Umschaltkomponente. Alternativ oder ergänzend ist die Auswerteeinheit durch oder innerhalb einer Verarbeitungskomponente, z.B. innerhalb der Firmware eines sogenannten Scaler-Chips, im Display realisiert.

Auf diese Weise stellt die Auswerteeinheit ein Bindeglied zwischen der Erzeugung des softwarebasierten Wechselbefehls durch die Software in einem der zwei Computersysteme und der Umschaltkomponente innerhalb des Displays dar, wobei eine einfache Auswertung des softwarebasierten Wechselbefehls durch die Auswerteeinheit und ein nachfolgendes Ansteuern der Umschaltkomponente erfolgt. Somit kann die Umschaltkomponente eine herkömmliche Standardkomponente sein, ohne speziell an die Bedürfnisse des hier erläuterten Verfahrens angepasst zu werden. Vielmehr wird eine gewisse "Intelligenz" in der separat von der Umschaltkomponente eingerichteten Auswerteeinheit innerhalb des Displays ausgenutzt, um den softwarebasierten Wechselbefehl auszuwerten.

In alternativen Implementierungen sind die Auswerteeinheit und die Umschaltkomponente in einer Einheit innerhalb des Displays implementiert beziehungsweise wird eine Funktionalität der Auswerteeinheit und eine Funktionalität der Umschaltkomponente durch eine einzige Einheit im Display realisiert.

In alternativen Implementierungen wird der softwarebasierte Wechselbefehl unmittelbar von der Umschaltkomponente innerhalb des Displays ausgewertet bzw. interpretiert. Eine separate Auswerteeinheit ist dann nicht erforderlich.

In alternativen oder ergänzenden Weiterbildungen beziehungsweise Implementierungen des Verfahrens ist der softwarebasierte Wechselbefehl ein sogenannter Virtual Control Panel (VCP)-Befehlscode gemäß dem sogenannten VESA Monitor Control Command Set (MCCS)-Standard. Alternativ oder ergänzend beeinflusst der softwarebasierte Wechselbefehl ein sogenanntes Virtual Control Panel gemäß dem MCCS-Standard.

Alternativ oder ergänzend verursacht der softwarebasierte Wechselbefehl eine Erzeugung/Änderung eines VCP-Befehlscodes gemäß dem MCCS-Standard innerhalb des Displays.

Der softwarebasierte Wechselbefehl wird beispielsweise von dem einen Computersystem (durch dessen Software er erzeugt wurde) gemäß dem sogenannten Display Data Channel Command Interface (DDC/CI)-Standard mittels der Bild-/Videosignal- Schnittstelle an das Display übertragen. Dies hat den Vorteil, dass keine speziellen Bus-Signale an einer sonstigen Datenleitung zwischen dem Computersystem und dem Display erforderlich sind beziehungsweise über eine komplexere Intelligenz im Display verarbeitet werden müssen. Vielmehr kann sich eines einfach zu implementierenden Übertragungsstandards einer Bild-/Videosignal-Schnittstelle zwischen dem Computersystem und dem Display bedient werden, um den softwarebasierten Wechselbefehl an das Display zu übertragen. Das Display beziehungsweise die Auswerteeinheit oder Umschaltkomponente innerhalb des Displays interpretieren den Wechselbefehl gemäß des MCCS-Befehlssatzes und lösen ein Umschalten mittels der Umschaltkomponente aus. Beispielsweise sendet das auslösende Computersystem einen vorbestimmten VCP-Befehlscode oder einen geänderten VCP-Befehlscode als softwarebasierten Wechselbefehl an das Display (ggf. die Auswerteeinheit innerhalb des Displays), der das Umschalten innerhalb der Umschaltkomponente auslöst. Alternativ oder ergänzend sendet das auslösende Computersystem einen softwarebasierten Wechselbefehl an das Display, der einen vorbestimmten VCP-Befehlscode oder eine Änderung eines VCP-Befehlscodes in der Auswerteeinheit und/oder in der Umschaltkomponente innerhalb des Displays bewirkt. Ein derartiger VCP-Befehlscode bzw. eine derartige Änderung des VCP-Befehlscodes löst dann wiederum das Umschalten innerhalb der Umschaltkomponente aus beziehungsweise erzeugt einen zusätzlichen Befehl zum Umschalten innerhalb der Umschaltkomponente. Ein VCP- Befehlscode der hier erläuterten Art ist beispielsweise herstellerspezifisch festgelegt zur hier erläuterten Steuerung/Auslösen eines Umschaltens des Peripheriegerätes zwischen den beteiligten Computersystemen.

In der beanspruchten Implementierungen des Verfahrens wird ein Auslösebefehl vom Peripheriegerät an das Display übertragen und mittels des Displays (geschaltet über die Umschaltkomponente) an das eine der zwei Computersysteme übermittelt. Der Auslösebefehl wird durch die Software in dem einen der zwei Computersysteme zum Erzeugen des softwarebasierten Wechselbefehls ausgewertet. Dies hat den Effekt, dass ein Umschalten des Peripheriegerätes zwischen den Computersystemen durch einen Auslösebefehl innerhalb des Peripheriegerätes ausgelöst werden kann. Dadurch, dass der Auslösebefehl durch die Software in dem einen der zwei Computersysteme ausgewertet wird, kann der Auslösebefehl beziehungsweise die Art seiner Erzeugung/Interpretation mittels der Software frei konfiguriert werden.

Der Auslösebefehl ist zum Beispiel das Betätigen einer bestimmten Taste oder Tastenkombination, ggf. innerhalb einer bestimmten Zeit. Zum Beispiel erfolgt dies auf einer Tastatur, die als Peripheriegerät am Display angeschlossen ist. Alternativ oder ergänzend ist der Auslösebefehl eine bestimmte Position und/oder Bewegung eines Mauszeigers einer Maus beziehungsweise das Betätigen einer bestimmten Taste oder Tastenkombination, ggf. innerhalb einer bestimmten Zeit, an der Maus, die als Peripheriegerät am Display angeschlossen ist. Ein solcher Auslösebefehl ist beispielsweise in Zusammenwirken mit einer Schaltfläche oder einer Markierung einer grafischen Benutzeroberfläche (Graphical User Interface, GUI) implementiert, die auf dem Displaybildschirm des Displays dargestellt wird.

Alternativ oder ergänzend kann ein Zustand beliebiger anderer (Peripherie-) Komponenten oder Sensoren innerhalb des Peripheriegerätes, innerhalb von direkt an die Computersysteme angeschlossenen Peripheriegeräten, innerhalb der Computersysteme oder innerhalb des Displays oder einer Kombination daraus als Auslösebefehl für das Umschalten herangezogen werden.

In alternativen oder ergänzenden Weiterbildungen beziehungsweise Implementierungen des Verfahrens ist der Auslösebefehl ein Befehl gemäß dem sogenannten Human Interface Device (HID)-Standard. Ein HID-Befehl ist einfach implementierbar, identifizierbar und verarbeitbar für die hier erläuterten Zwecke.

Die obige Aufgabe wird gemäß einem zweiten Aspekt durch ein Display gemäß Patentanspruch 9 gelöst. Weitergehende Ausführungen sind in den Unteransprüchen offenbart.

Das Display weist Schnittstellen zum Anschließen von wenigstens zwei Computersystemen und eines Peripheriegerätes auf. Die Schnittstellen des Displays umfassen beispielsweise USB-Schnittstellen zum Anschließen des Peripheriegerätes sowie der beiden Computersysteme (hinsichtlich eines Datenaustausches bzw. einer Energieversorgung) und Bild-/Videosignalschnittstellen, z.B. DVI oder HDMI, zum Anschließen der beiden Computersysteme (hinsichtlich eines Austausches von Bild-/Videosignalen bzw. entsprechenden Kommunikationssignalen).

Das Display ist eingerichtet:
- einen durch eine Software erzeugten softwarebasierten Wechselbefehl von einem von wenigstens zwei Computersystemen zu empfangen, die an das Display angeschlossen sind,
- ein Umschalten in einer Umschaltkomponente innerhalb des Displays anhand des softwarebasierten Wechselbefehls auszulösen, sowie
- bezüglich eines Peripheriegerätes, das am Display angeschlossen ist und das an ein erstes der wenigstens zwei Computersysteme angebunden ist, eine Anbindung des Peripheriegerätes von dem ersten der wenigstens zwei Computersysteme an das zweite der wenigstens zwei Computersysteme mittels der Umschaltkomponente umzuschalten.

Auch ein derartiges Display ermöglicht die Implementierung eines vereinfachten Umschaltens einer Anbindung eines Peripheriegerätes zwischen zwei Computersystemen, wie oben im Zusammenhang mit einem entsprechenden Verfahren erläutert worden ist. Insbesondere ermöglicht das Display ein automatisiertes Umschalten, ohne dass ein Benutzer sich einer mühsamen Änderung einer Schnittstellenkonfiguration am Display oder veränderter Einstellungen in einem Bildschirmmenü am Display bedienen muss. Vielmehr ermöglicht das Display ein automatisiertes, softwarebasiertes Umschalten mittels der Umschaltkomponente innerhalb des Displays anhand eines empfangenen softwarebasierten Wechselbefehls. Sämtliche weitergehenden Implementierungen des oben erläuterten Verfahrens finden in alternativen oder ergänzenden Weiterbildungen des Displays strukturellen Niederschlag.

Die Anordnung weist ein Display, ein Peripheriegerät und wenigstens zwei Computersysteme auf. Das Peripheriegerät und die zwei Computersysteme sind gemeinsam an das Display angeschlossen. Das Peripheriegerät ist über das gemeinsame Display an eines der zwei Computersysteme anbindbar. In der Anordnung sind jedes der zwei Computersysteme sowie das Display gemäß der jeweils oben erläuterten Art ausgeführt. Auch eine solche Anordnung ermöglicht ein automatisiertes und einfaches Umschalten eines Peripheriegerätes zwischen zwei Computersystemen, die parallel und gleichzeitig an einem Display angeschlossen sind, wie oben im Zusammenhang mit dem Verfahren, dem Display und dem Computersystem erläutert worden ist.

Das Computersystem weist eine oder mehrere Schnittstellen zum Anschließen an ein Display, insbesondere an ein Display der oben erläuterten Art, auf. Zum Beispiel weist das Computersystem eine USB-Schnittstelle zum Anschließen des Computersystems (hinsichtlich eines Datenaustausches bzw. einer Energieversorgung) und eine Bild-/Videosignalschnittstelle, z.B. DVI oder HDMI, zum Anschließen des Computersystems (hinsichtlich eines Austausches von Bild-/Videosignalen bzw. entsprechenden Kommunikationssignalen) auf.

Das Computersystem ist eingerichtet über ein Display, das mittels der wenigstens einen Schnittstelle am Computersystem angeschlossen ist, ein Peripheriegerät an das Computersystem anzubinden, wobei das Peripheriegerät zusätzlich am Display angeschlossen ist. Das bedeutet, dass sowohl das Peripheriegerät als auch das Computersystem parallel und gleichzeitig am Display angeschlossen sind, wobei das Peripheriegerät über das Display an das Computersystem angebunden ist.

Das Computersystem weist ferner eine Software auf, die konfiguriert ist, einen softwarebasierten Wechselbefehl zu erzeugen. Das Computersystem ist weiterhin eingerichtet, den softwarebasierten Wechselbefehl an das Display zu übertragen zum Umschalten der Anbindung des Peripheriegerätes zwischen dem Computersystem und einem anderen Computersystem, das zusätzlich an das Display angeschlossen ist.

Das hier erläuterte Computersystem ist beispielsweise über das Display mit dem ebenfalls am Display angeschlossen Peripheriegerät verbunden. Durch Auslösen des softwarebasierten Wechselbefehls in der Software des Computersystems wird ein automatisiertes Umschalten der Anbindung des Peripheriegerätes von dem Computersystem an das andere Computersystem ausgelöst. Alternativ ist das hier erläuterte Computersystem ein Computersystem, das eine Anbindung des Peripheriegerätes anfragt und hierzu den softwarebasierten Wechselbefehl durch die Software des Computersystems auslöst. Dadurch erfolgt ein automatisiertes Umschalten der Anbindung des Peripheriegerätes von einem anderen Computersystem (das an das Display angeschlossen ist) an dieses anfragende Computersystem. Auf diese Weise kann das Peripheriegerät mittels des hier erläuterten Computersystems auf einfache Art und Weise zwischen beteiligten Computersystemen, die parallel und gleichzeitig am Display angeschlossen sind, umgeschaltet werden. Sämtliche weitergehenden Implementierungen des oben erläuterten Verfahrens finden in alternativen oder ergänzenden Weiterbildungen des Computersystems strukturellen Niederschlag. Sämtliche Merkmale, Aspekte, Effekte sowie Implementierungen des oben erläuterten Verfahrens können ihren Niederschlag in entsprechenden Merkmalen, Aspekten, Effekten und Ausführungen eines oben erläuterten Displays, Computersystems beziehungsweise einer oben erläuterten Anordnung finden und umgekehrt.

Die Erfindung wird nachfolgend anhand von Ausführungsbeispielen unter Zuhilfenahme mehrerer Zeichnungen näher erläutert.

Es zeigen:
Figur 1 eine schematisierte Darstellung einer Ausführungsform einer Anordnung mit einem Display und daran angeschlossenem Peripheriegerät sowie ersten und zweiten Computersystemen,
Figuren 2 bis 7 diverse Zustände beziehungsweise Maßnahmen innerhalb der Anordnung gemäß Figur 1 zum Umschalten des Peripheriegerätes zwischen den angeschlossenen Computersystemen,
Figur 8 ein weiteres Ausführungsbeispiel einer Anordnung mit einem Display und daran angeschlossenem Peripheriegerät sowie ersten und zweiten Computersystemen in einem ersten Zustand und
Figur 9 die Anordnung gemäß Figur 8 in einem weiteren Zustand.

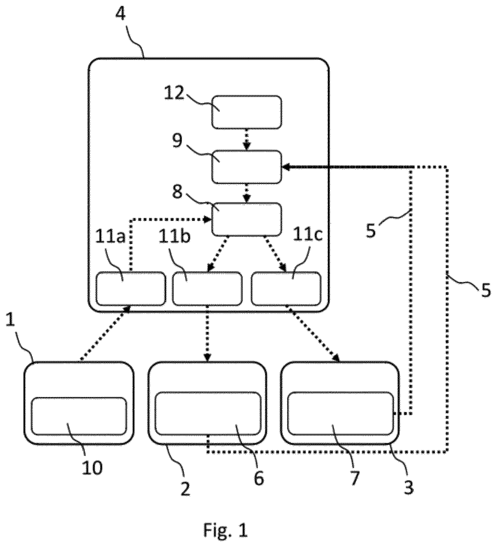

Figur 1 zeigt eine Anordnung mit einem Peripheriegerät 1, einem ersten Computersystem 2 und einem zweiten Computersystem 3, die sämtlich an ein Display 4 angeschlossen sind. Das Display 4 ist beispielsweise ein Computerbildschirm beziehungsweise Computerdisplay zur Anzeige von Bild- beziehungsweise Videosignalen, die von einem oder beiden der Computersysteme 2 und 3 an das Display 4 gesendet werden.

Hierzu sind beide Computersysteme 2 und 3 in der Ausführungsform gemäß Figur 1 jeweils über eine Bild-/Videosignal-Schnittstelle beziehungsweise Grafik-Schnittstelle (nicht explizit dargestellt) mit dem Display 4 verbunden. Zusätzlich sind die beiden Computersysteme 2 und 3 in der Ausführungsform gemäß Figur 1 jeweils über eine Datenschnittstelle mit dem Display 4 verbunden. Die Datenschnittstellen sind beispielsweise USB-Schnittstellen, während die Bild-/Videosignal-Schnittstellen beziehungsweise Grafik-Schnittstellen beispielsweise DVI- oder HDMI-Schnittstellen sind.

Das Peripheriegerät 1 ist über eine Datenschnittstelle mit dem Display 4 verbunden. Die Datenschnittstelle ist beispielsweise ebenfalls eine USB-Schnittstelle.

Zum Verbinden beziehungsweise Anschließen des Peripheriegeräts 1 über die entsprechende Datenschnittstelle weist das Display 4 eine USB-Schnittstelle 11a auf. Analog weist das Display 4 daneben zum Anschließen beziehungsweise Verbinden der Computersysteme 2 und 3 über die entsprechenden Datenschnittstellen jeweils eine USB-Schnittstelle 11b und 11c auf. Im Ausführungsbeispiel gemäß Figur 1 ist das Peripheriegerät 1 an die Schnittstelle 11a, das Computersystem 2 an die Schnittstelle 11b und das Computersystem 3 an die Schnittstelle 11c des Displays 4 angeschlossen.

Das Peripheriegerät 1 ist beispielsweise eine Tastatur und/oder eine Computermaus zum Steuern beziehungsweise Interagieren mit einem der beiden Computersysteme 2 und 3. Alternativ oder ergänzend ist das Peripheriegerät 1 ein Smartphone, Tablet, eine Kamera, ein Drucker, Scanner, o.ä.

Das Peripheriegerät 1 kann einen internen Auslösebefehl 10 erzeugen, dessen Funktion weiter unten näher erläutert wird. Die Computersysteme 2 und 3 weisen jeweils eine interne Software 6 beziehungsweise 7 auf, die zum Erzeugen eines softwarebasierten Wechselbefehls eingerichtet sind, was ebenfalls weiter unten näher erläutert wird. Die Software 6 und 7 kann identisch/gleich oder unterschiedlich sein.

Neben den internen USB-Schnittstellen 11a bis 11c und den (nicht explizit dargestellten) Bild-/Videosignal-Schnittstellen beziehungsweise Grafik-Schnittstellen weist das Display 4 eine Umschaltkomponente 8, eine Auswerteeinheit 9 sowie eine Konfigurationseinheit 12 auf. Die Umschaltkomponente 8 ist in der Ausführungsform gemäß Figur 1 zum Beispiel ein sogenannter KVM-Schalter. Die Umschaltkomponente 8 dient zum Umschalten einer Anbindung des Peripheriegerätes 1 entweder an das Computersystem 2 oder an das Computersystem 3 und zu einer entsprechenden Signalschaltung einer Kommunikation zwischen dem Peripheriegerät 1 über die Schnittstelle 11a und einem der Computersysteme 2 beziehungsweise 3 über die jeweilige Schnittstelle 11b oder 11c im Display 4.

Die Auswerteeinheit 9 innerhalb des Displays 4 dient zum Auswerten eines softwarebasierten Wechselbefehls, der durch eine der Software 6 beziehungsweise 7 des Computersystems 2 beziehungsweise des Computersystems 3 erzeugt wird. Diese Funktionalität wird ebenfalls weiter unten näher erläutert. Die Auswerteeinheit 9 ist beispielsweise ein spezieller integrierter Schaltkreis oder Mikrocontroller. Alternativ ist die Auswerteeinheit 9 in der Ausführungsform gemäß Figur 1 innerhalb eines sogenannten Scaler-Chips des Displays 4 implementiert. Beispielsweise ist die Auswerteeinheit 9 in einer solchen Implementierung innerhalb der Firmware des Scaler-Chips eingerichtet, zum Beispiel als Register. Dieses Register kann beispielsweise sowohl durch die Konfigurationseinheit 12, wie auch über einen I²C-Kanal der Bild-/Videosignal-Schnittstellen beziehungsweise Grafik-Schnittstellen (z.B. gemäß DDC/CI) ausgelesen und verändert werden.

Die Konfigurationseinheit 12 innerhalb des Displays 4 ist in der Ausführungsform gemäß Figur 1 beispielsweise eine Komponente zum Erzeugen eines Bildschirmmenüs (OSD), über das ein Benutzer bestimmte Einstellungen am Display 4 vornehmen kann.

In der Ausführungsform gemäß Figur 1 kann die Konfigurationseinheit 12 die Auswerteeinheit 9 ansteuern, beispielsweise zur Anzeige des Bildschirmmenüs OSD. Die Auswerteeinheit 9 kann wiederum die Umschaltkomponente 8 ansteuern zum Auslösen eines Umschaltens einer Kommunikation des Peripheriegerätes 1 über die Schnittstelle 11a zwischen dem Computersystem 2 und dem Computersystem 3 mittels der Schnittstellen 11b und 11c.

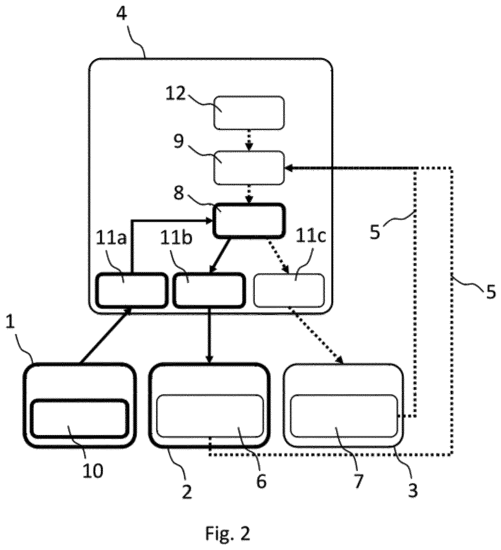

Eine entsprechend mögliche Signalisierung beziehungsweise ein entsprechend möglicher Signalfluss zwischen den jeweiligen Komponenten der Anordnung aus Figur 1 ist durch gestrichelte Pfeile zwischen den jeweiligen Komponenten angedeutet. Unter Zuhilfenahme der Figuren 2 bis 7 wird nachfolgend ein Verfahren zum automatisierten Umschalten einer Anbindung des Peripheriegerätes 1 zwischen den Computersystemen 2 und 3 und entsprechenden Maßnahmen in den jeweiligen Komponenten, insbesondere innerhalb des Displays 4 beziehungsweise dem Peripheriegerät 1 und den Computersystemen 2 und 3 erläutert. Hierbei werden maßgebliche Signalflüsse für jeweilige Verfahrensschritte beziehungsweise Maßnahmen zwischen den beteiligten Komponenten durch durchgezogene Pfeile beziehungsweise fett hervorgehobene Komponenten der Anordnung verdeutlicht.

Gemäß Figur 2 ist die Anordnung aus Figur 1 in einem Zustand, in dem das Peripheriegerät 1 zunächst an das Computersystem 2 angebunden ist. Hierzu erfolgt ein Signalfluss über die Datenschnittstelle des Peripheriegerätes 1 an die interne Schnittstelle 11a des Displays 4, wobei der Signalfluss über die Umschaltkomponente 8 und die Schnittstelle 11b an das Computersystem 2 vermittelt wird. Analoges gilt für einen entsprechenden Signalfluss vom Computersystem 2 über die Schnittstelle 11b und die Umschaltkomponente 8 innerhalb des Displays 4 an die Schnittstelle 11a und schließlich an das Peripheriegerät 1. Auf diese Weise interagiert das Peripheriegerät 1 mit dem Computersystem 2 beziehungsweise steuert eine Funktion des Computersystems 2 oder umgekehrt.

Durch das Peripheriegerät 1 kann ein Auslösebefehl 10 ausgelöst werden. Im Falle einer Implementierung des Peripheriegeräts 1 als Tastatur ist der Auslösebefehl 10 zum Beispiel eine Betätigung einer bestimmten Taste oder Tastenkombination, ggf. in einem bestimmten Zeitfenster. Zum Beispiel ist der Auslösebefehl 10 als 2-malige Betätigung der Steuerung-Taste (STRG) innerhalb von einer Sekunde implementiert. Im Falle einer Implementierung des Peripheriegerätes 1 als Computermaus ist der Auslösebefehl 10 beispielsweise die Betätigung einer Maustaste oder ein Betätigungsmuster einer oder mehrerer Maustasten und/oder eine bestimmte Mausbewegung, Position eines Mauszeigers auf dem Displaybildschirm des Displays 4 oder eine Kombination davon. Dies erfolgt gegebenenfalls unter Berücksichtigung/Beeinflussung/Steuerung einer grafischen Benutzeroberfläche (GUI), die auf dem Displaybildschirm des Displays 4 angezeigt wird. Zum Beispiel kann ein Benutzer mit der Computermaus eine bestimmte Schaltfläche der GUI anklicken oder betätigen. Im Falle einer Implementierung des Peripheriegerätes 1 als sonstiges Gerät (separat zu oder integriert in einem der Computersysteme 2 bzw. 3) ist der Auslösebefehl 10 beispielsweise über eine spezielle auslösende Funktion innerhalb des Peripheriegerätes 1 vorgegeben. Die auslösende Funktion wird beispielsweise über einen oder mehrere Sensoren des Peripheriegerätes 1 ausgelöst, zum Beispiel über einen biometrischen Identifikationssensor zur Identifikation eines Benutzers oder ähnliches.

Gemäß Figur 2 wird der Auslösebefehl 10 entsprechend über die Schnittstelle 11a, die Umschaltkomponente 8 und die Schnittstelle 11b an das angebundene Computersystem 2 übertragen. Innerhalb des Computersystems 2 wird der gesendete Auslösebefehl 10 entsprechend ausgewertet und interpretiert. Dies erfolgt gemäß dem hier erläuterten Implementierungsbeispiel innerhalb der Software 6 des Computersystems 2.

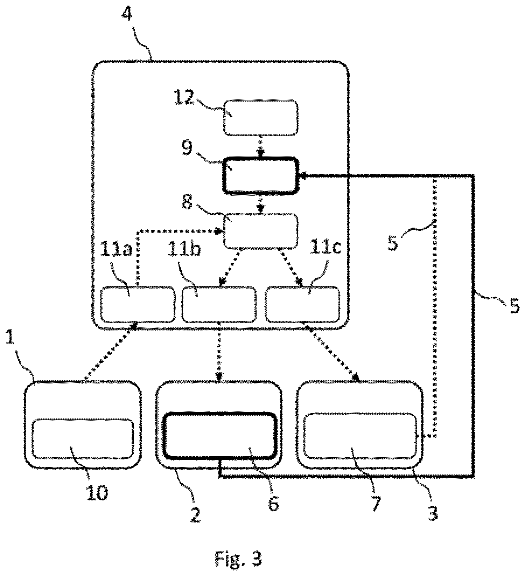

In einer weiteren Maßnahme beziehungsweise gemäß einem weiteren Verfahrensschritt erfolgt durch die Software 6 des Computersystems 2 das Erzeugen eines softwarebasierten Wechselbefehls aufgrund einer Interpretation des Auslösebefehls 10 des Peripheriegeräts 1. Der softwarebasierte Wechselbefehl 5 wird in der hier erläuterten Ausführungsform beispielsweise über die Grafik-Schnittstelle zwischen dem Computersystem 2 und dem Display 4 an die Auswerteeinheit 9 innerhalb des Displays 4 übertragen. Dies ist in Figur 3 dargestellt. Insbesondere sendet die Software 6 den softwarebasierten Wechselbefehl 5 an die Auswerteeinheit 9 innerhalb des Displays 4. Der softwarebasierte Wechselbefehl 5 ist beispielsweise ein VCP- Befehlscode beziehungsweise löst eine Änderung eines VCP-Befehlscodes innerhalb des Displays 4 aus. Der VCP- Befehlscode ist zum Beispiel der herstellerspezifische Code ,0xE2'.

Der softwarebasierte Wechselbefehl 5 wird über die Auswerteeinheit 9 im Display 4 ausgewertet beziehungsweise interpretiert. Insbesondere bedient sich die Auswerteeinheit 9 dabei der MCCS-standardisierten Sprache. Der softwarebasierte Wechselbefehl 5 wird beispielsweise gemäß dem DDC/CI-Standard mittels der Grafik-Schnittstelle zwischen dem Computersystem 2 und dem Display 4 übertragen. Dies hat den Vorteil, dass innerhalb des Displays 4 eine standardisierte und einfache Verarbeitung beziehungsweise Interpretation solcher Kommandos zwischen dem Computersystem 2 und dem Display 4 implementierbar ist. Insbesondere können hierzu standardisierte Komponenten innerhalb des Displays 4 verwendet werden. Außerdem kann eine Signalisierung auf diese Weise erfolgen, ohne dass eine sonstige Datenverbindung zwischen dem Display 4 und dem Computersystem 2 mittels der Schnittstelle 11b aktiv sein muss. Auch erfordert dies keine aufwändigere Implementierung entsprechender Auswertekomponenten innerhalb des Displays 4, die über eine Verarbeitung gemäß dem verwendeten Datensignal-Standard der Schnittstelle 11b zwischen dem Display 4 und dem Computersystem 2 verfügen. Auch dies erleichtert die Implementierung des hier erläuterten Vorgehens.

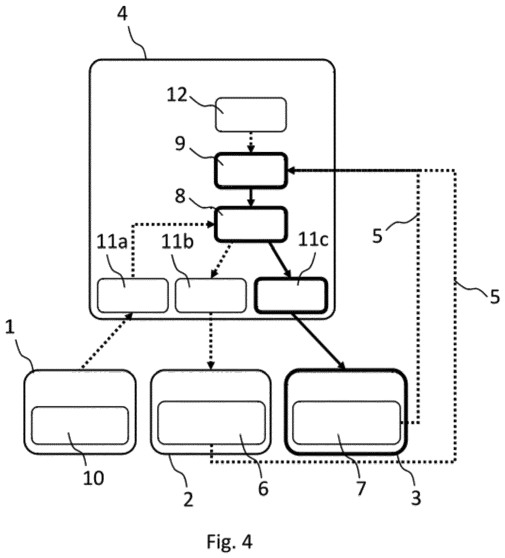

Im Weiteren wertet gemäß Figur 4 die Auswerteeinheit 9 innerhalb des Displays 4 den entsprechend empfangenen softwarebasierten Wechselbefehl 5 des Computersystems 2 (konkret der Software 6 innerhalb des Computersystems 2) aus und löst innerhalb der Umschaltkomponente 8 ein Umschalten einer Signalweiterleitung von der Schnittstelle 11b auf die Schnittstelle 11c aus. Konkret wechselt somit die Umschaltkomponente 8 eine Signalweiterleitung von der Datenschnittstelle 11b (siehe oben) nun auf die Datenschnittstelle 11c, wie in Figur 4 veranschaulicht. Somit ist nun anstelle der Schnittstelle 11b die Schnittstelle 11c des Displays 4 für eine Anbindung und Signalweiterleitung zwischen dem Peripheriegerät 1 und dem Computersystem 3 aktiv. Eine Datenverbindung beziehungsweise Signalweiterleitung über die Schnittstelle 11b ist mittels der Umschaltkomponente 8 in diesem Zustand deaktiviert.

In einer beispielhaften Implementierung der oben erläuterten Maßnahmen ist der herstellerspezifische VCP-Code ,0xE2' beispielsweise in der Firmware des Displays 4 standardmäßig auf den Wert ,0x00' gesetzt und der Konfigurationseinstellung "USB Upstream: Primary" (z.B. über die Konfigurationseinheit 12) gleichgesetzt. Die Software 6 (oder auch die Software 7) kann nun zunächst beispielsweise über den DDC/CI-Kanal den aktuellen Wert auslesen. Wird der Auslösebefehl erkannt, kann die Software 6 über den I²C-Bus der Bild-/Videosignal-Schnittstelle beziehungsweise Grafik-Schnittstelle gemäß DDC/CI ein Kommando absetzen, welches den VCP-Code ,0xE2' auf den Wert ,0x01' ändert. Das Ändern des VCP-Codes erzeugt automatisch ein Ändern der Konfigurationseinstellung auf "USB Upstream: Secondary" und veranlasst damit z.B. einen Scaler- Chip innerhalb des Displays 4 über eine entsprechende PIN-Verbindung zur Umschaltkomponente 8, das Umschalten via GPIO-Signal auszulösen.

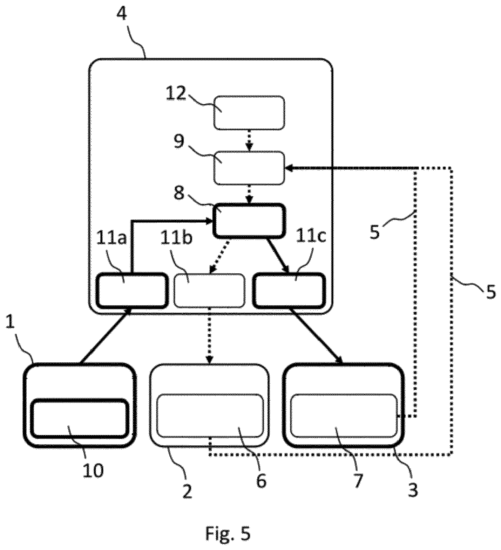

Aufgrund dieser Maßnahmen erfolgt nunmehr gemäß Figur 5 eine umgeschaltete Anbindung des Peripheriegerätes 1 über die Schnittstelle 11a und die Umschaltkomponente 8, mittels der nun aktivierten Schnittstelle 11c an das Computersystem 3. Das bedeutet, dass das Peripheriegerät 1 gemäß Figur 5 nun an das Computersystem 3 angebunden ist, anstelle einer Anbindung an das Computersystem 2, wie oben im Zusammenhang mit Figur 2 erläutert worden ist.

Gemäß Figur 5 erfolgt nun eine Anbindung beziehungsweise Signalkommunikation zwischen dem Peripheriegerät 1 und dem Computersystem 3. Eine solche Kommunikation wird mittels der Schnittstelle 11a, der Umschaltkomponente 8 und einer Weiterleitung an die Schnittstelle 11c innerhalb des Displays 4 gemanagt.

Analog zum obigen Vorgehen kann wiederum ein Auslösebefehl 10 gemäß Figur 5 innerhalb des Peripheriegeräts 1 ausgelöst werden. Dieser wird über die Schnittstelle 11a, die Umschaltkomponente 8 und die Schnittstelle 11c an das Computersystem 3 signalisiert.

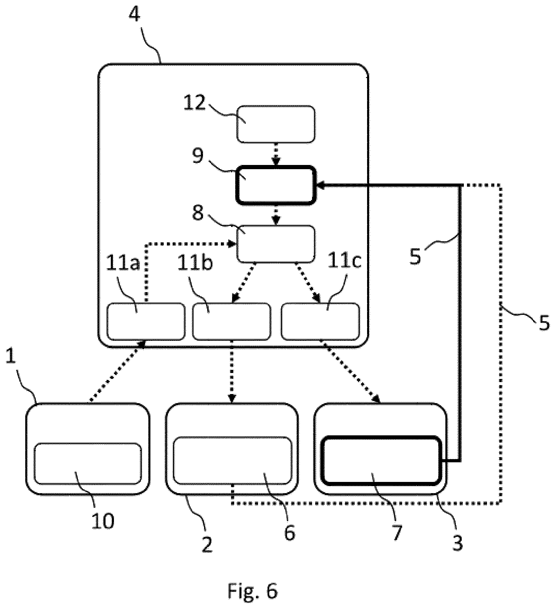

Gemäß Figur 6 erfolgt schließlich eine Auswertung eines wiederum erzeugten Auslösebefehls 10 des Peripheriegeräts 1 innerhalb der Software 7 des Computersystems 3. Dieses Vorgehen ist in dieser Implementierung analog zum Vorgehen, wie im Zusammenhang mit der Software 6 gemäß Figur 3 oben erläutert worden ist.

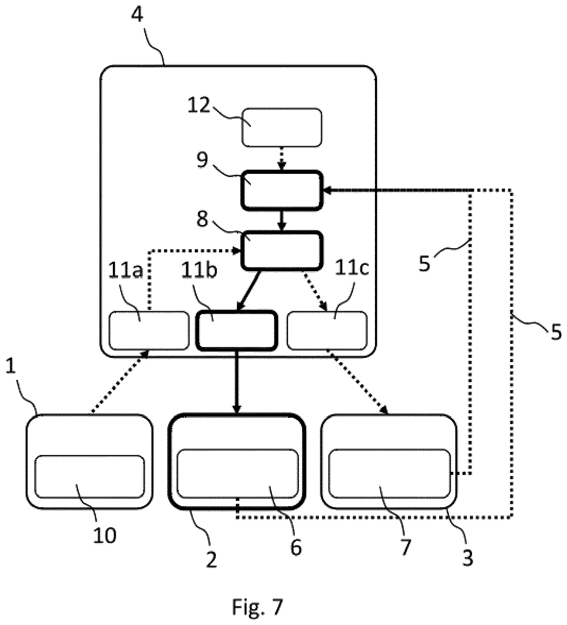

Gemäß Figur 6 sendet nun die Software 7 einen entsprechend erzeugten softwarebasierten Wechselbefehl 5 über eine Schnittstellenanbindung des Computersystems 3 mittels einer Grafik-Schnittstelle an das Display 4, wobei der Wechselbefehl 5 ebenso in der Auswerteeinheit 9 empfangen und interpretiert wird. Analog zum obigen Vorgehen erfolgt nun gemäß Figur 7 ein Auslösen eines Umschaltens durch die Auswerteeinheit 9 in der Umschaltkomponente 8, wobei nun eine Signalkommunikation wiederum von der Schnittstelle 11c auf die Schnittstelle 11b umgeschaltet wird. Insofern wird automatisiert eine Anbindung des Computersystems 3 auf eine Anbindung des Computersystems 2 zurückgeschaltet. Nach Ausführen der Maßnahmen gemäß Figur 7 ist somit wieder der Initialzustand gemäß Figur 2 eingerichtet, in dem das Peripheriegerät 1 wiederum an das Computersystem 2 angebunden ist. Dabei ist erneut eine entsprechende Signalisierung zwischen dem Peripheriegerät 1 und dem Computersystem 2 mittels der Schnittstellen 11a, 8 und 11b des Displays 4 eingerichtet.

Auf diese Weise ist es möglich, durch einen Auslösebefehl 10 innerhalb des Peripheriegerätes, zum Beispiel durch einen einfachen Tastendruck oder eine einfache Tastenkombination einer Tastatur 1, ein automatisiertes Umschalten des Peripheriegerätes 1 zwischen den beiden Computersystemen 2 und 3 vorzunehmen. Sämtliche Signalkommunikation wird dabei automatisiert mittels des softwarebasierten Wechselbefehls 5 der entsprechenden Software 6 oder 7 über die Auswerteeinheit 9 und die Umschaltkomponente 8 geschaltet.

Der in der jeweiligen Software 6, 7 erzeugte softwarebasierte Wechselbefehl 5 kann über die Software 6, 7 beliebig eingestellt oder konfiguriert werden. Auf diese Weise ist der Wechselbefehl 5 nicht von der Konfiguration einer internen Intelligenz im Display 4 abhängig, sondern kann flexibel mittels der Software 6, 7 programmiert werden. Es ist auch möglich das kumulative Auftreten mehrerer Ereignisse als Wechselbefehl einzustellen, z.B. das Betätigen einer Tastenkombination bei gleichzeitigem Auslösen eines bestimmten Erfassungsmusters oder -signals eines Sensors, z.B. eines biometrischen Sensors.

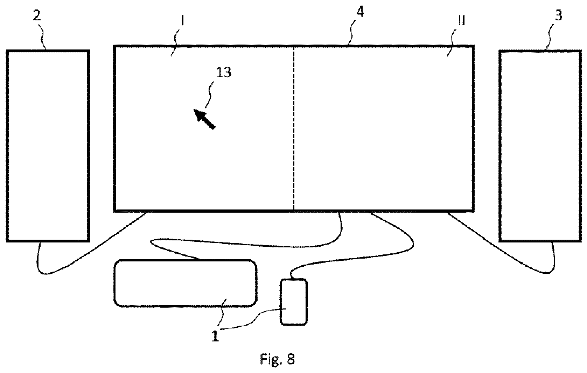

Figur 8 zeigt eine weitere Ausführungsform einer Anordnung mit Peripheriegeräten 1, einem Display 4 sowie zweier Computersysteme 2 und 3. Die Peripheriegeräte 1 umfassen in der Ausführungsform gemäß Figur 8 eine Tastatur und eine Computermaus, die entsprechend den obigen Erläuterungen an das Display 4 angeschlossen sind. Des Weiteren sind die Computersysteme 2 und 3 gemäß Figur 8 ebenso analog zu den obigen Erläuterungen an das Display 4 angeschlossen.

Figur 8 veranschaulicht eine Funktionalität des Displays 4, bei der eine sogenannte Picture-by-Picture-Funktion realisiert ist. Das bedeutet, dass im Display 4, konkret auf einem Displaybildschirm des Displays 4 zwei Anzeigebereiche eingerichtet sind, zum zeitgleichen Anzeigen paralleler Bildschirminhalte, die von den Computersystemen 2 und 3 parallel erzeugt werden. Das bedeutet, dass konkret in einem ersten Anzeigebereich I ein Video- beziehungsweise Bildinhalt anzeigbar ist, der durch das Computersystem 2 erzeugt wird. Daneben kann in einem zweiten Anzeigebereich II ein Videobeziehungsweise Bildinhalt angezeigt werden, der durch das Computersystem 3 erzeugbar ist. Gemäß Figur 8 befindet sich im ersten Anzeigebereich I auf dem Displaybildschirm des Displays 4 ein Mauszeiger 13.

In dieser Konstellation erfolgt eine Steuerung beziehungsweise Interaktion der Peripheriegeräte 1 mit dem Computersystem 2. Das bedeutet zum Beispiel, dass durch Verschieben/Klicken der Maus 1 der Mauszeiger 13 im ersten Anzeigebereich I auf dem Displaybildschirm des Displays 4 kontrollierbar ist. Wird nun ein Auslösebefehl 10 gemäß den obigen Erläuterungen in Zusammenschau mit den Figuren 1 bis 7 ausgelöst, der zum Beispiel ein Drücken einer bestimmten Taste auf der Tastatur 1 oder ein bestimmtes Drücken einer Maustaste der Maus 1 oder eine bestimmte Bewegung der Maus 1 oder eine sonstige Geste der Maus 1 umfasst, so erfolgt ein automatisiertes Umschalten einer Anbindung der Peripheriegeräte 1 vom Computersystem 2 an das Computersystem 3 gemäß den oben erläuterten Maßnahmen.

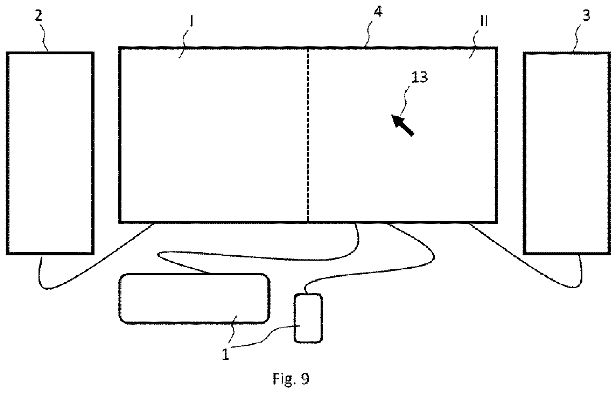

Eine derartige veränderte Umschaltung einer Anbindung der Peripheriegeräte 1 nun an das Computersystem 3 ist in Figur 9 erläutert. Hier sind nun die Peripheriegeräte 1 an das Computersystem 3 angebunden. Dies hat zur Folge, dass ein Mauszeiger 13 nunmehr im zweiten Anzeigebereich II des Displaybildschirms des Displays 4 über die Peripheriegeräte 1 kontrollierbar ist. Ein Mauszeiger 13 im ersten Anzeigebereich I ist über die Peripheriegeräte 1 nicht mehr kontrollierbar. Die Peripheriegeräte 1 steuern beziehungsweise interagieren nunmehr mit dem Computersystem 3.

Die Figuren 8 und 9 und entsprechende Erläuterungen veranschaulichen somit eine Picture-by-Picture-Funktionalität des Displays 4, wobei die Peripheriegeräte 1 auf einfache Weise in ihrer Anbindung zwischen den Computersystemen 2 und 3 umgeschaltet werden können. Auf diese Weise kann ein Benutzer sehr schnell durch Vornahme eines Auslösebefehls 10 der oben erläuterten Art zwischen einer Steuerung des Computersystems 2 und einer Steuerung des Computersystems 3 wechseln, deren Bildschirminhalte auf dem Display 4 angezeigt werden.

Die dargestellten Ausführungsformen und Implementierungen sind lediglich beispielhaft gewählt.

### Bezugszeichenliste

- 1: Peripheriegerät
- 2: Computersystem
- 3: Computersystem
- 4: Display
- 5: Wechselbefehl
- 6: Software
- 7: Software
- 8: Umschaltkomponente
- 9: Auswerteeinheit
- 10: Auslösebefehl
- 11a, 11b, 11c: Schnittstellen
- 12: Konfigurationseinheit
- 13: Mauszeiger
- I: erster Anzeigebereich
- II: zweiter Anzeigebereich

## Patentansprüche

1. Verfahren zum Umschalten wenigstens eines Peripheriegerätes (1) zwischen wenigstens zwei Computersystemen (2, 3),
wobei das Peripheriegerät (1) und die zwei Computersysteme (2, 3) an ein gemeinsames Display (4) angeschlossen sind, und wobei das Peripheriegerät (1) über das gemeinsame Display (4) an ein erstes Computersystem (2) der zwei Computersysteme (2, 3) angebunden ist, umfassend die folgenden Schritte:
- Übertragen eines Auslösebefehls (10) von dem Peripheriegerät (1) an das Display (4);
- Übermitteln des Auslösebefehls (10) mittels des Displays (4) an das erste Computersystem (2);
- Auswerten des Auslösebefehls (10) durch eine Software (6, 7) in dem ersten Computersystem (2) zum Erzeugen eines softwarebasierten Wechselbefehls (5) durch die Software (6, 7),
- Übertragen des softwarebasierten Wechselbefehls (5) an das Display (4) mittels einer Grafik-Schnittstelle zwischen dem ersten Computersystem und dem Display,
- Auslösen eines Umschaltens in einer Umschaltkomponente (8) innerhalb des Displays (4) anhand des softwarebasierten Wechselbefehls (5),
- Umschalten der Anbindung des Peripheriegerätes (1) von dem ersten Computersystem (2) an ein zweites Computersystem (3) der zwei Computersysteme (2, 3) mittels der Umschaltkomponente (8).

2. Verfahren nach Anspruch 1, wobei der softwarebasierte Wechselbefehl (5) durch eine Auswerteeinheit (9) innerhalb des Displays (4) verarbeitet wird und die Auswerteeinheit (9) das Umschalten in der Umschaltkomponente (8) auslöst.

3. Verfahren nach Anspruch 1 oder 2, wobei der softwarebasierte Wechselbefehl (5)
- ein Virtual Control Panel Befehlscode gemäß dem Monitor Control Command Set Standard ist und/oder
- ein Virtual Control Panel gemäß dem Monitor Control Command Set Standard beeinflusst und/oder
- eine Änderung eines Virtual Control Panel Befehlscodes gemäß dem Monitor Control Command Set Standard innerhalb des Displays (4) verursacht.

4. Verfahren nach einem der Ansprüche 1 bis 3, wobei der Auslösebefehl (10) ein Befehl gemäß dem Human Interface Device Standard ist.

5. Verfahren nach einem der Ansprüche 1 bis 4, wobei das Display eine Picture-by-Picture-Funktion mit zwei Anzeigebereichen (I, II) aufweist, und von den wenigstens zwei Computersystemen (2, 3) parallel erzeugte Bildschirminhalte zeitgleich in den zwei Anzeigebereichen (I, II) angezeigt werden.

6. Verfahren nach Anspruch 5, wobei
das wenigstens eine Peripheriegerät (1) eine Computermaus umfasst, wobei die Computermaus vor dem Umschalten einen Mauszeiger (13) in einem ersten Anzeigebereich (I) der zwei Anzeigebereiche (I, II) zum Anzeigen eines Bildschirminhalts des ersten Computersystems (2) kontrolliert und nach dem Umschalten einen Mauszeiger (13) in einem zweiten Anzeigebereich (II) der zwei Anzeigebereiche (I, II) zum Anzeigen eines Bildschirminhalts des zweiten Computersystems (3) kontrolliert.

7. Verfahren nach Anspruch 6, wobei der Auslösebefehl (10) ein Drücken einer Maustaste der Computermaus oder eine bestimmte Bewegung der Computermaus oder eine sonstige Geste der Computermaus umfasst.

8. Verfahren nach einem der Ansprüche 1 bis 6, wobei das wenigstens eine Peripheriegerät (1) eine Tastatur umfasst, und wobei der Auslösebefehl (10) ein Drücken einer bestimmten Taste auf der Tastatur umfasst.

9. Display (4) aufweisend Schnittstellen (11a, 11b, 11c) zum Anschließen von wenigstens zwei Computersystemen (2, 3) und wenigstens eines Peripheriegerätes (1), und Grafik-Schnittstellen zum Anschließen der wenigstens zwei Computersysteme,
wobei das Display (4) eingerichtet ist:
- einen Auslösebefehl (10) von einem Peripheriegerät (1) zu empfangen, das am Display (4) angeschlossen ist und das an ein erstes Computersystem (2) der wenigstens zwei Computersysteme (2, 3), die an das Display (4) angeschlossen sind, angebunden ist;
- den von dem Peripheriegerät (1) empfangenen Auslösebefehl (10) an das erste Computersystem (2) zum Erzeugen eines softwarebasierten Wechselbefehls (5) durch eine Software (6, 7) des ersten Computersystems (2) zu übermitteln;
- einen durch die Software (6, 7) des ersten Computersystems (2) erzeugten softwarebasierten Wechselbefehl (5) von dem ersten Computersystem (2) über die jeweilige Grafik-Schnittstelle zu empfangen,
- ein Umschalten in einer Umschaltkomponente (8) innerhalb des Displays (4) anhand des softwarebasierten Wechselbefehls (5) auszulösen, sowie
- bezüglich des Peripheriegerätes (1) eine Anbindung des Peripheriegerätes (1) von dem ersten Computersystem (2) an ein zweites Computersystem (3) der wenigstens zwei Computersysteme (2, 3) mittels der Umschaltkomponente (8) umzuschalten.

10. Display (4) nach Anspruch 9, wobei das Display (4) eine interne Auswerteeinheit (9) aufweist, die eingerichtet ist den empfangenen softwarebasierten Wechselbefehl (5) zu verarbeiten und das Umschalten in der Umschaltkomponente (8) auszulösen.

11. Display (4) nach Anspruch 9 oder 10, wobei das Display (4) derart konfiguriert ist, dass der empfangene softwarebasierte Wechselbefehl (5) als ein Virtual Control Panel Befehlscode gemäß dem Monitor Control Command Set Standard erkannt wird und/oder ein Virtual Control Panel gemäß dem Monitor Control Command Set Standard beeinflusst und/oder eine Änderung eines Virtual Control Panel Befehlscodes gemäß dem Monitor Control Command Set Standard innerhalb des Displays (4) verursacht.

12. Display (4) nach einem der vorhergehenden Ansprüche 9-11, wobei das Display eine Picture-by-Picture-Funktion mit zwei Anzeigebereichen (I, II) zum zeitgleichen Anzeigen von den wenigstens zwei Computersystemen (2, 3) parallel erzeugter Bildschirminhalte aufweist.

13. Anordnung, umfassend:
- ein Display (4) gemäß einem der Ansprüche 9 bis 12,
- das wenigstens eine an das Display (4) angeschlossene Peripheriegerät (1), und
- die wenigstens zwei, jeweils mittels wenigstens einer der Schnittstellen (11b, 11c) und jeweils einer der Grafik-Schnittstellen an das Display (4) angeschlossene Computersysteme (2, 3),
- wobei jedes der Computersysteme (2, 3) dazu eingerichtet ist, das Peripheriegerät (1) über das Display (4) an das Computersystem (2, 3) anzubinden,
- wobei jedes der Computersysteme (2, 3) dazu eingerichtet ist, mittels des Displays (4) einen vom Peripheriegerät (1) erzeugten Auslösebefehl (10) zu empfangen;
- wobei jedes der Computersysteme (2, 3) ferner die Software (6, 7) aufweist, die dazu konfiguriert ist, den empfangenen Auslösebefehl (10) auszuwerten, um einen softwarebasierten Wechselbefehl (5) zu erzeugen,
- wobei jedes der Computersysteme (2, 3) dazu eingerichtet ist, den softwarebasierten Wechselbefehl (5) an das Display (4) zum Umschalten der Anbindung des Peripheriegerätes (1) zwischen einem ersten Computersystem (2) und einem zweiten Computersystem (3) der wenigstens zwei Computersysteme (2, 3) über die jeweilige Grafik-Schnittstelle zu übertragen.

## Claims

1. A method for switching at least one peripheral device (1) between at least two computer systems (2, 3), the peripheral device (1) and the two computer systems (2, 3) being connected to a common display (4), and the peripheral device (1) being linked via the common display (4) to a first computer system (2) of the two computer systems (2, 3), comprising the following steps:
- transferring a trigger command (10) from the peripheral device (1) to the display (4);
- transmitting the trigger command (10) by means of the display (4) to the first computer system (2);
- evaluating the trigger command (10) by a software (6, 7) in the first computer system (2) to generate a software-based changeover command (5) by the software (6, 7),
- transferring the software-based changeover command (5) to the display (4) by means of a video interface between the first computer system and the display,
- triggering a switching process in a switching component (8) within the display (4) using the software-based changeover command (5),
- switching the linkage of the peripheral device (1) from the first computer system (2) to a second computer system (3) of the two computer systems (2, 3) by means of the switching component (8).

2. The method according to claim 1, wherein the software-based changeover command (5) is processed by an evaluation unit (9) within the display (4) and the evaluation unit (9) triggers the switching process in the switching component (8).

3. The method according to claim 1 or 2, wherein the software-based changeover command (5)
- is a Virtual Control Panel command code according to the Monitor Control Command Set standard and/or
- has an effect on a Virtual Control Panel according to the Monitor Control Command Set standard and/or
- causes a change to a Virtual Control Panel command code according to the Monitor Control Command Set within the display (4).

4. The method according to any of claims 1 to 3,
wherein the trigger command (10) is a command according to the Human Interface Device standard.

5. The method according to any of claims 1 to 4,
wherein the display has a picture-by-picture function with two display areas (I, II), and screen contents generated in parallel by the at least two computer systems (2, 3) are displayed simultaneously in the two display areas (I, II).

6. The method according to claim 5, wherein
the at least one peripheral device (1) comprises a computer mouse, the computer mouse, prior to the switching process, controlling a mouse pointer (13) in a first display area (I) of the two display areas (I, II) for displaying a screen content of the first computer system (2) and, after the switching process, controls a mouse pointer (13) in a second display area (II) of the two display areas (I, II) for displaying a screen content of the second computer system (3) .

7. The method according to claim 6, wherein the trigger command (10) comprises pressing a mouse key of the computer mouse or a certain movement of the computer mouse or another gesture of the computer mouse.

8. The method according to any of claims 1 to 6,
wherein the at least one peripheral device (1) comprises a keyboard, and wherein the trigger command (10) comprises pressing a specific key on the keyboard.

9. A display (4) comprising interfaces (11a, 11b, 11c) for connecting at least two computer systems (2, 3) and at least one peripheral device (1), and video interfaces for connecting the at least two computer systems,
wherein the display (4) is configured to:
- receive a trigger command (10) from a peripheral device (1) which is connected to the display (4) and linked to a first computer system (2) of the at least two computer systems (2, 3) which are connected to the display (4);
- transmit the trigger command (10) received from the peripheral device (1) to the first computer system (2) for generating a software-based changeover command (5) by a software (6, 7) of the first computer system (2);
- receive a software-based changeover command (5) generated by the software (6, 7) of the first computer system (2) from the first computer system (2) via the respective video interface,
- trigger a switching process in a switching component (8) within the display (4) using the software-based changeover command (5), and
- with respect to the peripheral device (1), switch a linkage of the peripheral device (1) from the first computer system (2) to a second computer system (3) of the at least two computer systems (2, 3) by means of the switching component (8).

10. The display (4) according to claim 9, wherein the display (4) has an internal evaluation unit (9) which is configured to process the received software-based changeover command (5) and to trigger the switching process in the switching component (8).

11. The display (4) according to claim 9 or 10, wherein the display (4) is configured in such a way that the received software-based changeover command (5) is recognized as a Virtual Control Panel command code according to the Monitor Control Command Set standard and/or has an effect on a Virtual Control Panel according to the Monitor Control Command Set standard and/or causes a change to a Virtual Control Panel command code according to the Monitor Control Command Set standard within the display (4).

12. The display (4) according to any of the preceding claims 9 to 11, wherein the display has a picture-by-picture function with two display areas (I, II) for simultaneously displaying screen contents generated in parallel by the at least two computer systems (2, 3).

13. An arrangement, comprising:
- a display (4) according to any of claims 9 to 12,
- the at least one peripheral device (1) connected to the display (4), and
- the at least two computer systems (2, 3) connected in each case to the display (4) by means of at least one of the interfaces (11b, 11c) and one of the video interfaces,
- wherein each of the computer systems (2, 3) is configured to link the peripheral device (1) to the computer system (2, 3) via the display (4),
- wherein each of the computer systems (2, 3) is configured to receive, by means of the display (4), a trigger command (10) generated by the peripheral device (1);
- wherein each of the computer systems (2, 3) further comprises the software (6, 7) which is configured to evaluate the received trigger command (10) in order to generate a software-based changeover command (5),
- wherein each of the computer systems (2, 3) is configured to transfer the software-based changeover command (5) to the display (4) for switching the linkage of the peripheral device (1) between a first computer system (2) and a second computer system (3) of the at least two computer systems (2, 3) via the respective video interface.

## Revendications

1. Procédé de commutation d'au moins un appareil périphérique (1) entre au moins deux systèmes informatiques (2, 3), sachant que l'appareil périphérique (1) et les deux systèmes informatiques (2, 3) sont raccordés à un affichage (4) commun, et sachant que l'appareil périphérique (1) est relié via l'affichage (4) commun à un premier système informatique (2) des deux systèmes informatiques (2, 3), comprenant les étapes suivantes :
- transfert d'un ordre de déclenchement (10) depuis l'appareil périphérique (1) à l'affichage (4) ;
- transmission de l'ordre de déclenchement (10) moyennant l'affichage (4) au premier système informatique (2) ;
- évaluation de l'ordre de déclenchement (10) par un logiciel (6, 7) dans le premier système informatique (2) pour générer un ordre de changement (5) basé sur logiciel par le logiciel (6, 7),
- transfert de l'ordre de changement (5) basé sur logiciel à l'affichage (4) moyennant une interface graphique entre le premier système informatique et l'affichage,
- déclenchement d'une commutation dans un composant de commutation (8) au sein de l'affichage (4) à l'aide de l'ordre de changement (5) basé sur logiciel,
- commutation de la liaison de l'appareil périphérique (1) depuis le premier système informatique (2) à un deuxième système informatique (3) des deux systèmes informatiques (2, 3) moyennant le composant de commutation (8).

2. Procédé selon la revendication 1, sachant que l'ordre de changement (5) basé sur logiciel est traité par une unité d'évaluation (9) au sein de l'affichage (4) et l'unité d'évaluation (9) déclenche la commutation dans le composant de commutation (8).

3. Procédé selon la revendication 1 ou 2, sachant que l'ordre de changement (5) basé sur logiciel
- est un code d'ordre de *Virtual Control Panel* selon la norme *Monitor Control Command Set* et/ou
- influence un *Virtual Control Panel* selon la norme *Monitor Control Command Set* et/ou
- provoque une modification d'un code d'ordre de *Virtual Control Panel* selon la norme *Monitor Control Command Set* au sein de l'affichage (4).

4. Procédé selon l'une des revendications 1 à 3, sachant que l'ordre de déclenchement (10) est un ordre selon la norme *Human Interface Device.*

5. Procédé selon l'une des revendications 1 à 4, sachant que l'affichage présente une fonction *Picture-by-Picture* avec deux zones d'affichage (I, II), et des contenus d'écran générés parallèlement par les au moins deux systèmes informatiques (2, 3) sont affichés simultanément dans les deux zones d'affichage (I, II).

6. Procédé selon la revendication 5, sachant que l'au moins un appareil périphérique (1) comprend une souris informatique, sachant que la souris informatique, avant la commutation, contrôle un pointeur de souris (13) dans une première zone d'affichage (I) des deux zones d'affichage (I, II) pour afficher un contenu d'écran du premier système informatique (2) et, après la commutation, contrôle un pointeur de souris (13) dans une deuxième zone d'affichage (II) des deux zones d'affichage (I, II) pour afficher un contenu d'écran du deuxième système informatique (3) .

7. Procédé selon la revendication 6, sachant que l'ordre de déclenchement (10) comprend un enfoncement d'une touche de souris de la souris informatique ou un mouvement déterminé de la souris informatique ou un autre geste de la souris informatique.

8. Procédé selon l'une des revendications 1 à 6, sachant que l'au moins un appareil périphérique (1) comprend un clavier, et sachant que l'ordre de déclenchement (10) comprend un enfoncement d'une touche déterminée sur le clavier.

9. Affichage (4) présentant des interfaces (11a, 11b, 11c) destinées à raccorder au moins deux systèmes informatiques (2, 3) et au moins un appareil périphérique (1), et des interfaces graphiques destinées à raccorder les au moins deux systèmes informatiques,
sachant que l'affichage (4) est configuré pour
- recevoir un ordre de déclenchement (10) depuis un appareil périphérique (1) qui est raccordé à l'affichage (4) et qui est relié à un premier système informatique (2) des au moins deux systèmes informatiques (2, 3) qui sont raccordés à l'affichage (4) ;
- transmettre l'ordre de déclenchement (10) reçu par l'appareil périphérique (1) au premier système informatique (2) pour générer un ordre de changement (5) basé sur logiciel par un logiciel (6, 7) du premier système informatique (2) ;
- recevoir un ordre de changement (5) basé sur logiciel généré par le logiciel (6, 7) du premier système informatique (2) depuis le premier système informatique (2) via l'interface graphique respective,
- déclencher une commutation dans un composant de commutation (8) au sein de l'affichage (4) à l'aide de l'ordre de changement (5) basé sur logiciel, ainsi que
- concernant l'appareil périphérique (1), commuter une liaison de l'appareil périphérique (1) depuis le premier système informatique (2) à un deuxième système informatique (3) des au moins deux systèmes informatiques (2, 3) moyennant le composant de commutation (8).

10. Affichage (4) selon la revendication 9, sachant que l'affichage (4) présente une unité d'évaluation (9) interne qui est configurée pour traiter l'ordre de changement (5) basé sur logiciel reçu et déclencher la commutation dans le composant de commutation (8).

11. Affichage (4) selon la revendication 9 ou 10, sachant que l'affichage (4) est configuré de telle manière que l'ordre de changement (5) basé sur logiciel reçu est détecté comme un code d'ordre de *Virtual Control Panel* selon la norme *Monitor Control Command Set* et/ou influence un *Virtual Control Panel* selon la norme *Monitor Control Command* Set et/ou provoque une modification d'un code d'ordre de *Virtual Control Panel* selon la norme *Monitor Control Command* Set au sein de l'affichage (4).

12. Affichage (4) selon l'une des revendications précédentes 9 à 11, sachant que l'affichage présente une fonction *Picture-by-Picture* avec deux zones d'affichage (I, II) destinées à afficher simultanément des contenus d'écran générés parallèlement par les au moins deux systèmes informatiques (2, 3).

13. Agencement, comprenant :
- un affichage (4) selon l'une des revendications 9 à 12,
- l'au moins un appareil périphérique (1) raccordé à l'affichage (4), et
- les au moins deux systèmes informatiques (2, 3) raccordés à l'affichage (4) respectivement moyennant une des interfaces (11b, 11c) et respectivement une des interfaces graphiques,
- sachant que chacun des systèmes informatiques (2, 3) est configuré pour relier l'appareil périphérique (1) au système informatique (2, 3) via l'affichage (4),
- sachant que chacun des systèmes informatiques (2, 3) est configuré pour recevoir un ordre de déclenchement (10) généré par l'appareil périphérique (1) moyennant l'affichage (4) ;
- sachant que chacun des systèmes informatiques (2, 3) présente en outre le logiciel (6, 7) qui est configuré pour évaluer l'ordre de déclenchement (10) reçu pour générer un ordre de changement (5) basé sur logiciel,
- sachant que chacun des systèmes informatiques (2, 3) est configuré pour transférer l'ordre de changement (5) basé sur logiciel à l'affichage (4) pour commuter la liaison de l'appareil périphérique (1) entre un premier système informatique (2) et un deuxième système informatique (3) des au moins deux systèmes informatiques (2, 3) via l'interface graphique respective.
